(19) Europäisches Patentamt
European Patent Office
Office européen des brevets

(11) EP 2 048 877 A2

(12) **EUROPEAN PATENT APPLICATION**

(43) Date of publication:
**15.04.2009 Bulletin 2009/16**

(51) Int Cl.:
***H04N 5/232*** *(2006.01)*

(21) Application number: **08253272.2**

(22) Date of filing: **08.10.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **08.10.2007 GB 0719633**

(71) Applicant: **KeyMed**
**(Medical & Industrial Equipment) Ltd**
**Southend-on-Sea**
**Essex SS2 5QH (GB)**

(72) Inventors:
• **Robinson, Christopher Paul**
**Basildon**
**Essex SS16 6SX (GB)**
• **Cormack, John George**
**Chelmsford**
**Essex CM2 6RG (GB)**
• **Paris, Nicki John**
**Southend-on-Sea**
**Essex SS2 4JH (GB)**

(74) Representative: **Frost, Alex John**
**Boult Wade Tennant**
**Verulam Gardens**
**70 Gray's Inn Road**
**London WC1X 8BT (GB)**

Remarks:
A request for correction of the description has been filed pursuant to Rule 139 EPC. A decision on the request will be taken during the proceedings before the Examining Division (Guidelines for Examination in the EPO, A-V, 3.).

(54) **Electronic camera**

(57) An electronic camera (8) and corresponding method of operation for providing a viewable image to a display device, the camera comprising: an image sensor portion for receiving light from an object and generating image data representative of an image therefrom; and an image processing portion (30) for receiving and processing the image data for output to a display device; wherein the image processing portion is arranged to measure the state of focus of the image and to generate image focus data representative thereof, the image focus data providing a visual representation of the state of focus of the image for output to a display device, the image processing portion being further arranged to overlay the image focus data onto the corresponding image data, such that the visual representation of the state of focus of the image and an image representative of the image data may together be output to a display device.

Fig. 2

EP 2 048 877 A2

**Description**

Field of the invention

This invention relates to an electronic camera and a method of operation of such a camera.

Background of the invention

Digital still or video cameras are often provided with a display for reviewing stored images or for previewing a scene to be recorded. The display may be separate from but connectable to, or integral to, the camera. In this specification, the term image may be used to refer to a photographic image, a still image, or a video image (as a single frame or as part of a series of frames).

When a camera is used with a display which has a lower resolution than that of the image sensor of the camera, it can be difficult to ensure that the lens of the camera is properly focused. This is because the lower resolution display is unable to reproduce the full detail of an image as provided by the image sensor. Also, focusing a camera requires a user to maximise the amplitude of the image detail having the highest resolution. That is, focusing a camera manually is a subjective exercise and is therefore open to human error.

The problem is that the user may be able to set the camera within a range of focal lengths, which - while affecting the degree of focus of the image actually recorded by the image sensor - does not discernibly alter the image displayed on the low-resolution screen. It is therefore possible - indeed, probable - for the user to set the focus of the camera incorrectly, but for the image displayed on the low-resolution screen still to appear sharp or in focus. Such an error would not usually be noticed until the user displayed the stored image on a full-resolution display, at which stage it would typically be too late to correct the focusing error (it is often not possible or practical to connect a camera to a full-resolution display at the time of image capture).

Although many cameras are provided with an autofocus function, most of them also have a manual focus mode and the above problem is therefore still present in that mode. In many portable and compact cameras, the problem is exacerbated by the large disparity between the resolution of the image sensor and the resolution of the display.

Despite the widespread use of autofocus functionality, there are still many cameras which only have manual focus functionality. Among these are high-speed video (HSV) cameras. HSV cameras are well known in industry for their use in analysing events or processes which the human eye, or a conventional video camera, is unable to capture with sufficient time resolution. HSV cameras find application in the fields of combustion and detonation events, robotic operations, high-speed mechanical operations timing analysis, ballistics testing, swing analysis in sports such as golf or tennis, liquid and gas flow investigations, and vehicle impact testing.

Autofocus is particularly useful in point-and-shoot types of applications, but it is a recognised problem that it can cause a camera to focus on the wrong object. If it is desired to select a particular area of a scene, which area many not be in the centre, autofocus is often unusable.

Furthermore, in high-speed video applications, it is often desirable to focus a HSV camera to an object plane which does not yet contain the object to be imaged, in anticipation of the arrival of that object in the scene at some future time. In such a case, the autofocus function typically attempts to focus the camera on an object which is already present in the scene.

This is especially so with vehicle impact testing. For the majority of the time, the video camera frames a relatively empty scene, which is mainly occupied by the wall on the other side of the test chamber. When the crash-test sled appears in the foreground, it must be in proper focus from the very first frame. However, the autofocus function causes the camera initially to focus on the wall and, when the sled appears, to begin gradually to focus on the sled. The sled is thereby brought into focus, but relatively slowly and long after the test itself is complete.

US-A1-2006/0078217 relates to an out-of-focus detection method, which calculates an edge gradient magnitude at each pixel position and an edge width from luminance values of an object image, and computes an out-of-focus evaluation value at each pixel position therefrom. The object image is divided into a preset number of blocks, and a representative out-of-focus evaluation value in each block is determined and compared with a preset threshold value to categorize each block as in-focus or out-of-focus. The object image is determined as in-focus or out-of-focus, based on the total number of in-focus blocks, the total number of out-of-focus blocks, and the relative positions of the in-focus block areas and the out-of-focus block areas to the whole image. A message representing the focus evaluation for the target area is output on a display.

EP-A1-1,593,997 and JP-A1-2005/094782 relate to a focus state display apparatus comprising focus area extraction means for extracting the image signals of a predetermined area from photographed image signals, edge enhancement processing means for enhancing the edge of the extracted image signals, time integration value calculation means for calculating an integration value of the edge-enhanced image signals, focus state determination means for determining the focus state from the calculated integration value, and focus state display means for displaying the determined focus state. The focus state may be displayed as a bar graph, level meter, numerical value, colour of an indicator block, or density of displayed characters on a display screen.

JP-A-2001/136419 relates to a focus assist function, in which a focusing signal is processed and provided as focus information on a part of a view finder menu display.

EP-A2-1,835,732 relates to a focus information display system comprising two "correct focus determination devices" for determining the focus state of an image and a focus state display device for displaying the focus state in a focus information display section of the display. In the display section, "0" means correct focus, "-" means front focus, and "+" means rear focus.

EP-A1-1,555,558 relates to a focus state display, wherein a focus state judging means judges whether or not an image captured from imaging means is in focus, a focus direction judging means judges a focus direction, and a focus state display means indicates information about the focus state and focus direction on a display means. The focus state may be displayed as the number of graphical symbols, or in combination with the focus direction as up/down or left/right arrows on a display screen.

JP-A-2002/196225 relates to a focus state display device equipped with a high-frequency extraction means which forms differential image data by extracting the high-frequency components of space frequencies from given image data, a coloration means which forms the differential image signal colorized by allocating prescribed colours thereto according to pixel values indicating the high-frequency components of the differential image data and a display means which displays the differential image data colorized by the coloration means. The device notices the focus state by the difference of the colour.

There is a need therefore for an electronic camera and for a method of camera operation for which the problems associated with manual focusing and the problems associated with autofocusing are reduced or avoided. The invention aims to provide such a camera and method.

Summary of the invention

In one aspect of the invention, there is provided an electronic camera for providing a viewable image to a display device, the camera comprising: an image sensor portion for receiving light from an object and generating image data representative of an image therefrom; and an image processing portion for receiving and processing the image data for output to a display device; wherein the image processing portion is arranged to measure the state of focus of the image and to generate image focus data representative thereof, the image focus data providing a visual representation of the state of focus of the image for output to a display device, the image processing portion being further arranged to overlay the image focus data onto the corresponding image data, such that the visual representation of the state of focus of the image and an image representative of the image data may together be output to a display device.

The electronic camera is thus arranged to provide an output signal, for output to an image display, so that an indication of the state of focus of an image may be shown on the display. In this way, the uncertainty associated with focusing an image by viewing the image on a low-resolution display can be avoided, since a user does not need to judge the state of focus based on the image as presented on the low-resolution display; instead, the user is provided with a readily observable objective measure of the state of focus and no subjective evaluation is necessary.

Preferably, the state of focus of an image is determined by measuring the edge detail in the image, using an edge detector. The edge detail signal is then used in the provision of the image focus signal.

The edge detector preferably comprises a high-pass filter for extracting the edge detail. A preferred filter is a finite impulse response (FIR) filter. The bipolar response of such a filter is preferably clipped, to remove the negative response, thereby providing unipolar edge data.

Preferably, the image focus data are configured to provide the visual representation of the degree of focus of the image by providing a representation of the edge detail of the image, derived from the edge detector. For example, the visual representation may comprise one or more outlines, which trace in-focus edges found in the image. This helps to reduce the quantity of information provided in the visual representation (since out-of-focus parts of the image and areas of generally constant colour/luminance between edges are not highlighted), making it easier for a user to locate the in-focus parts of the image.

Preferably, the visual representation is readily visually perceptible by a user and is provided by a variable parameter, such as luminance or colour of the displayed representation. For example, a higher luminance or a particular colour, or both, can be used to indicate a higher degree of focus in the image. Preferably, still, a false-colour generator is used to apply one or more selected colours to different parts of the representation to be displayed, the particular colour indicating the degree of focus. In a preferred embodiment, selected colours are used, ranging from blue, to represent out-of-focus parts of an image, to red, to represent in-focus parts of the image.

In some circumstances, it may be beneficial to mitigate against noisy images, by ignoring low-amplitude state-of-focus signals, so that a zero or negligible output signal is provided for state-of-focus signals below a selected amplitude.

In order to assist a user in identifying an area of interest in an image, both the image and the state-of-focus representation are output from the camera together, as a combined or overlaid signal. So as not to confuse or distract a user, the image is preferably of reduced amplitude (around 25% of the original amplitude being found to be beneficial). Furthermore, the image is preferably converted to a monochrome image, so that the only colouration in the combined output is from the representation of the state of focus of the image.

In some embodiments, references to the image are to a selected region of the image. In this way, a particular region of a scene may be considered.

In another aspect of the invention, there is provided a method of operation of an electronic camera, the method comprising the steps of: receiving light from an object and generating an image; measuring a degree of focus of the image and generating image focus data representative thereof, the image focus data providing a visual representation of the degree of focus of the image; overlaying the image focus data onto the corresponding image data; and outputting the image focus data and the image data to a display device, such that the visual representation of the state of focus of the image and an image representative of the image data may be viewed together.

Other preferred features and advantages of the invention are set out in the description and in the dependent claims, which are appended hereto.

Brief description of the drawings

The invention may be put into practice in a number of ways and some embodiments will now be described, by way of non-limiting example only, with reference to the following figures, in which:

Figure 1 shows an electronic camera according to one embodiment of the invention;
Figure 2 shows schematically an overview of an image processing device according to one embodiment;
Figure 3 shows schematically part of the edge detection process according to one embodiment;
Figure 4 shows schematically the bipolar to unipolar conversion process according to one embodiment;
Figure 5 shows the output of the false-colour generator according to one embodiment;
Figure 6 shows an exemplary image with the camera at far-focus according to one embodiment;
Figure 7 shows an indication of the degree of focus within the image of figure 6, according to one embodiment;
Figure 8 shows an exemplary image with the camera at near-focus according to one embodiment; and
Figure 9 shows an indication of the degree of focus within the image of figure 8, according to one embodiment.

Description of a preferred embodiment

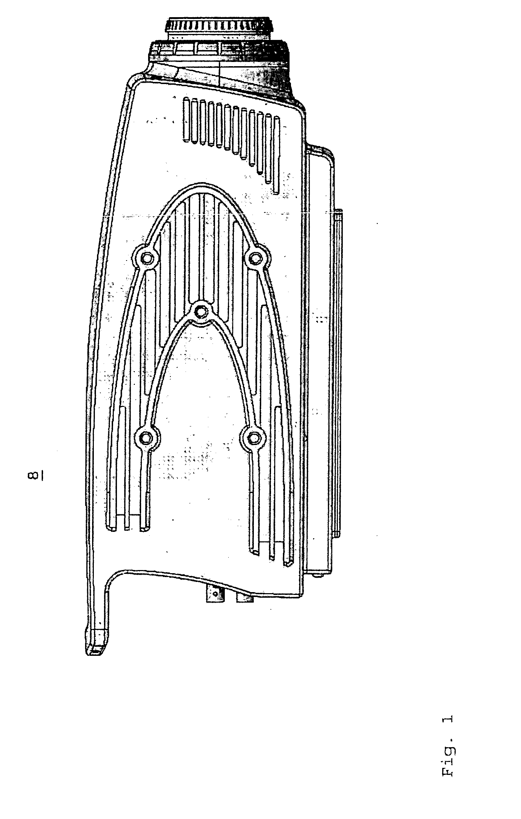

Referring to figure 1, there is shown an electronic camera 8, in accordance with one embodiment of the invention. The camera 8 has an optical assembly (not shown) for receiving and focusing light onto an image sensor (also not shown) and a processing assembly for processing the resulting image information. The camera's output may be to a display device, a recording/storage device, or to its own memory.

In use, the camera 8 is directed towards a scene to be captured. Light from one or more objects in the scene is focused onto the image sensor of the camera by the optical assembly. An image of the scene is thereby formed at the sensor, which generates image data representative thereof. The image signal may then undergo various image processing steps, before being output to an image display for viewing. The image data may additionally or alternatively be stored in memory, if the camera is in record mode for still or video images (the camera may have only one, or both, of these record modes).

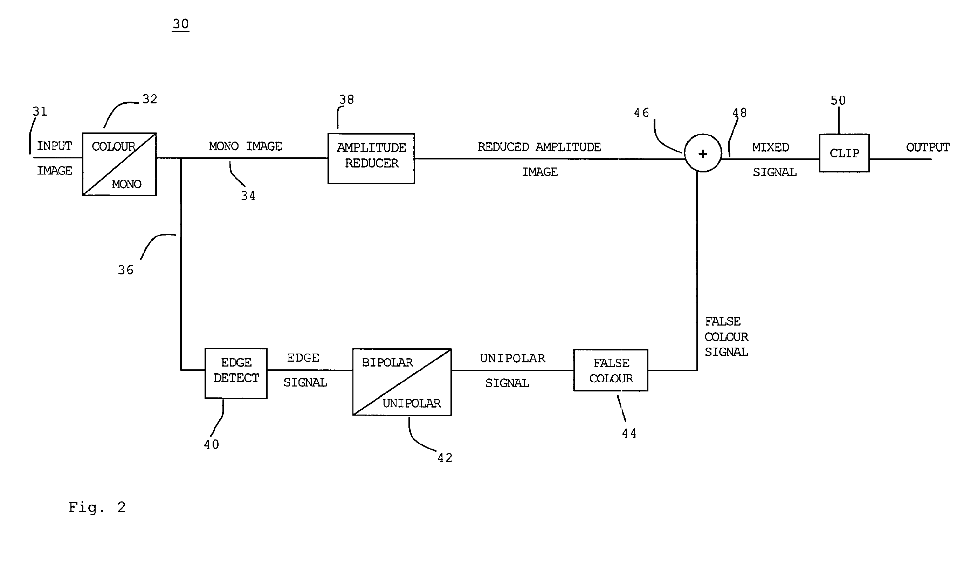

A schematic overview of the function of the camera 8 is shown in figure 2, in accordance with one embodiment. Following observation of a displayed image, it may be necessary or desirable to focus the camera 8 to capture a scene, or a particular region of a scene, better. The camera 8 incorporates a focusing tool to assist and facilitate the focusing process. When the camera is in communication with an image display - either separate from but connected to the camera, or integral with the camera itself - the display output of the camera may be shown on the image display. In normal camera modes, such as (live) preview, record or playback/review, the display output is typically of the image(s) being previewed, recorded or reviewed.

According to the present embodiment, a focusing mode of the camera may be selected, to make use of the focusing tool. In this mode, the image processor analyses the image data representing an image, to measure the state or degree of focus of the image. Focus data are thereby generated, providing an indication of which parts of the image are in focus and which are out of focus. The focus data are passed to the display output of the camera, providing a visual representation of the degree of focus of the image which is shown on the image display. A user may thereby gauge the extent to which the image, or region of interest, is in focus and adjust the focus of the camera as appropriate.

The visual representation of the state of focus may take a number of forms. For example, it may be binary: parts of the image which are found to be in focus are rendered 'on' and may be presented as white/bright pixels in the display output; and parts of the image which are found to be out of focus are rendered 'off' and may be presented as black/dark pixels in the display output. The values for the focus data which are considered to represent in-focus parts of an image may of course be selected according to need/desire.

However, the visual representation preferably provides a more detailed gauge of the degree of focus of the image in the form of a range of values for a variable parameter which may be perceived by a user (the range of values representing the degree of focus). For example, the parameter may be luminance (perceived as brightness) of the visual representation output to the image display. Alternatively or additionally, the parameter is the colour of the visual representation. The parameter may, in particular, be a false-colour rendition of the degree of focus of the image, each different colour indicating a different degree of focus.

It will be appreciated that it is most beneficial for the visual representation to be mapped to the image from which the focus data are derived. Although the visual representation alone may be output to an image display, it is preferable for it to be overlaid on or combined with the image itself, so that a user can readily associate the state of focus information with the image. Since it is not necessary for a user to view the image at its original luminance (brightness) in order to make this association, a relatively dim or reduced-amplitude version of the image may be output to the image display. Furthermore, especially when providing the degree of focus information in false-colour, it may be confusing or distracting for the image to be provided in its original, colour form. Accordingly, the image may be converted to a monochrome, i.e. greyscale, version for combination with the visual representation, so that the visual representation may be more readily perceived.

The focusing tool provides the advantage that a user may quickly ascertain the degree to which an image is in focus by visually observing the output from the camera. The visual representation of the state of focus of the image is generally carried in a digital video signal of the same resolution as the original image. The resolution in which a user sees the visual representation is either preserved or reduced depending on the monitor used. Since focus data may be represented in colour, and is not limited by resolution, a lower-resolution monitor will still accurately show the state of focus. Accordingly, although the full detail of the image cannot be reproduced on a low(er)-resolution image display, the information provided by the focus data in the visual representation can be shown on the image display, so the problems associated with focusing a camera using a low(er)-resolution image display can be avoided.

A preferred embodiment of the focusing tool is next described, with reference to figure 2. Input image data are generated by the image sensor of the camera 8 and received by an image processor 30. The image processor 30 comprises a first signal path 31, along which there is a colour-to-monochrome signal converter 32. The first signal path 31 is divided into a second signal path 34 and a third signal path 36. Along the first signal path 34 is an amplitude reducer 38. Along the second signal path 36 is an edge detector 40, a bipolar-to-unipolar signal converter 42, and a false-colour generator 44. The two signal paths 34,36 are combined at an adder 46, from which a fourth signal path 48 extends. Along the fourth signal path 48 is a signal clipper 50. Downstream of the signal clipper 50, the resulting signal is provided to a display output (not shown).

In use, the image data are received along the first signal path 31 and converted to monochrome (greyscale) data by the converter 32. The monochrome signal is then routed along the second and third signal paths 34,36. Along the second signal path 34, the amplitude reducer 38 reduces the amplitude of the monochrome image signal by a factor of N, which may vary from 1 upwards. In the preferred embodiment, N = 4, so the amplitude is reduced to around 25% of its initial valve. The reduced amplitude image signal is then passed to the adder 46.

Along the third path 36, the monochrome image signal is passed through an edge detector 40, to obtain edge detail (dark-to-light and light-to-dark transitions within the image). The edge detail is indicative of the degree of focus of the image, or part of the image. The resulting edge signal is a bipolar signal so is converted to a unipolar signal by clipping the negative parts of the signal in the converter 42. The unipolar edge signal is then passed into the false-colour generator 44, which generates a false-colour representation of the edge signal. The false-colour representation of the state of focus of the image is then passed to the adder 46.

The adder 46 combines the false-colour representation with the reduced amplitude image signal and the combined signal is clipped by the signal clipper 50, to ensure the combined signal lies within a desired signal amplitude range. The resulting signal is then provided to a display output for display on an image display, as described above.

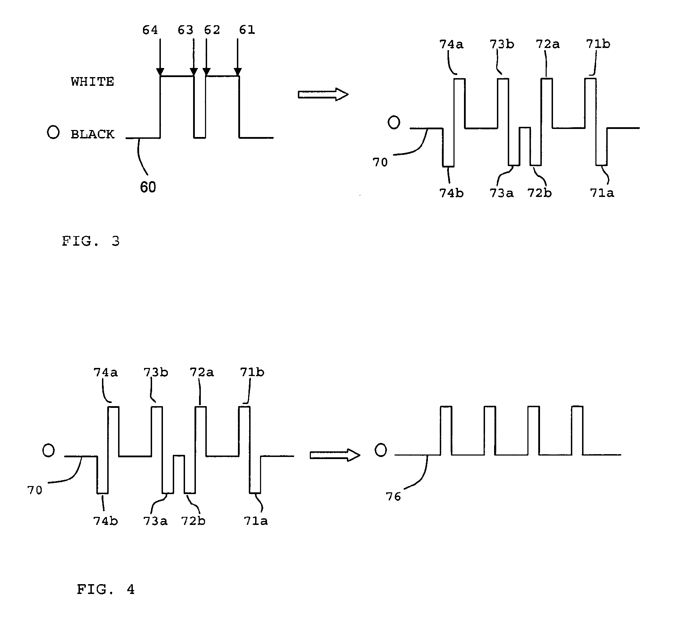

The operation of the edge detector 40 is next described, with reference to figure 3. Sharp edges (e.g. dark-to-light or light-to-dark transitions) in an image provide high-frequency information spatially; the sharper the edge, the higher the frequencies. Out-of-focus parts of an image contain little or no high-frequency information spatially. Accordingly, as sharper focus of an image is attained, so the presence of high frequencies in the image increases. A preferred method of measuring the state of focus of an image is therefore to high-pass filter the image and look at the amplitude of the resulting signal.

In one embodiment, the edge detector 40 comprises a high-pass filter to sample the edge detail of the monochrome image signal. In the preferred embodiment, the filter is a finite impulse response (FIR) filter. The FIR filter comprises a 3 x 3 coefficient high-pass filter and, in this embodiment is represented as:

$$\begin{bmatrix} -1 & -2 & -1 \\ -2 & +12 & -2 \\ -1 & -2 & -1 \end{bmatrix}$$

This matrix describes the filter characteristics used to perform the edge detection. The values of the coefficients may be changed or more coefficients may be added (e.g., a 5 x 4 matrix) to provide different high pass characteristics. However, the above matrix represents the currently preferred filter for the preferred embodiment.

The operation of the filter is exemplified in figure 3, in which an input image wave 60 provides output wave 70 after passing through the filter. In the input image wave 60, zero amplitude represents black or dark pixels and a peak amplitude represents white or light pixels, so the wave represents two sets of transitions from dark to light then from light to dark. Each transition is indicated by a respective signal edge 61-64.

Following processing by the filter, the output wave 70 comprises a pre-shoot peak 71a-74a and a post-shoot peak 71b-74b for each respective edge 61-64 of the input image wave 60. The pre-shoot and post-shoot peaks of each respective pair are of opposite polarity, the polarity of each depending on the direction of the edge transition.

The positive and negative responses from a FIR high-pass filter have a tendency to average or cancel each other out, when provided on a display and viewed from a distance. Accordingly, in a preferred embodiment, the negative responses are removed by clipping in the bipolar-unipolar converter 42. An example of this process is illustrated in figure 4.

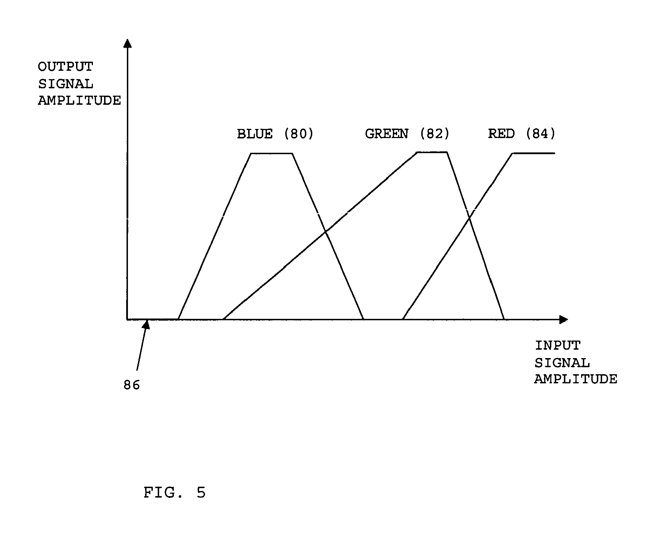

The operation of the false-colour generator 44 is next described, with reference to figure 5. The unipolar edge signal from the converter 42 is monochrome/greyscale, with amplitude varying in accordance with the sharpness of focus across the image. Representing the signal amplitude by false colour provides a visual representation of the degree of focus of an image in a readily perceptible format. In a preferred embodiment, the false-colour conversion is nonlinear (i.e., the frequency of the colour applied does not simply scale with the amplitude of the unipolar edge signal). The false-colour regime may be selected to suit the needs or desires of a particular application. In a preferred embodiment, generally, the false-colour generator 44 does not render unfocused areas, slightly focused areas are rendered in blue, more focused areas are rendered in green and sharply focused areas are rendered in red.

More specifically, figure 5 shows a graph illustrating the output signal - in terms of colour and amplitude - for a given input signal amplitude (i.e., the unipolar edge signal amplitude). As can be seen from the graph, the output signal consists of three tristimulus signals, such as RGB, YCrCb, YPrPb, YUV, or YIQ. In this embodiment, the tristimulus signals are RGB and the colour and amplitude of the output signal is determined solely from the amplitude of the input signal.

The graph shows the individual output signal amplitudes for each of the tristimulus variables, with blue referenced 80, green referenced 82, and red referenced 84. In some circumstances, in particular with a noisy image, it may be beneficial to ignore low unipolar edge signal levels. Accordingly, in this embodiment, there is a region of low edge signal amplitude, referenced 86, for which the output amplitude is zero for all tristimulus variables. Of course, in other embodiments, the output signal may include non-zero values for one or more of the tristimulus variables as soon as the input signal itself is a non-zero value.

Thus, in this embodiment, with increasing input signal amplitude, the output signal appears dark/black, then dim blue, bright blue, cyan, green, yellow, orange and finally red. The variation in colour in this manner (from "cold" to "hot" colours through the visible light spectrum) is both intuitive and readily recognisable.

In a preferred embodiment, and as illustrated in figure 5, the start, slope and hold points of each RGB variable are selected so that the luminance of the overall output signal increases with increasing input signal amplitude. This further improves the perceptibility of the visual representation of the degree of focus of the image.

The skilled person will appreciate that the image processing described above may be implemented in a number of ways. In a preferred embodiment, however, the processing is performed by a field-programmable gate array (FPGA), programmed in VHDL (very high-speed integrated circuit hardware description language).

In one embodiment, a camera provided with the focusing tool and being connected to an image display, or having an integral image display, may be used as follows. The camera is directed at a scene to be viewed and is set in the focusing mode. Accordingly, a reduced-amplitude, monochrome representation of the image is provided on the image display, along with a false-colour representation of the degree to which the various parts of the image are in focus. From the image representation, a user can identify enough of the scene to be able to locate an area of interest. The user can then manually adjust the focus of the camera until the false-colour overlay displays the maximum amount of red colouration, at least in the area of interest. This indicates that an optimum or desired focus setting for the image has been achieved.

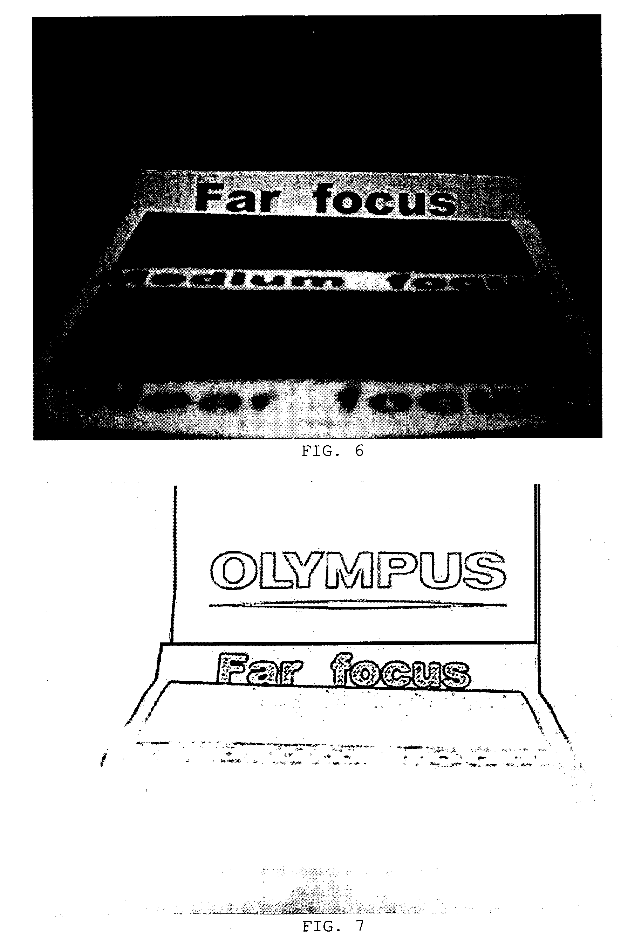

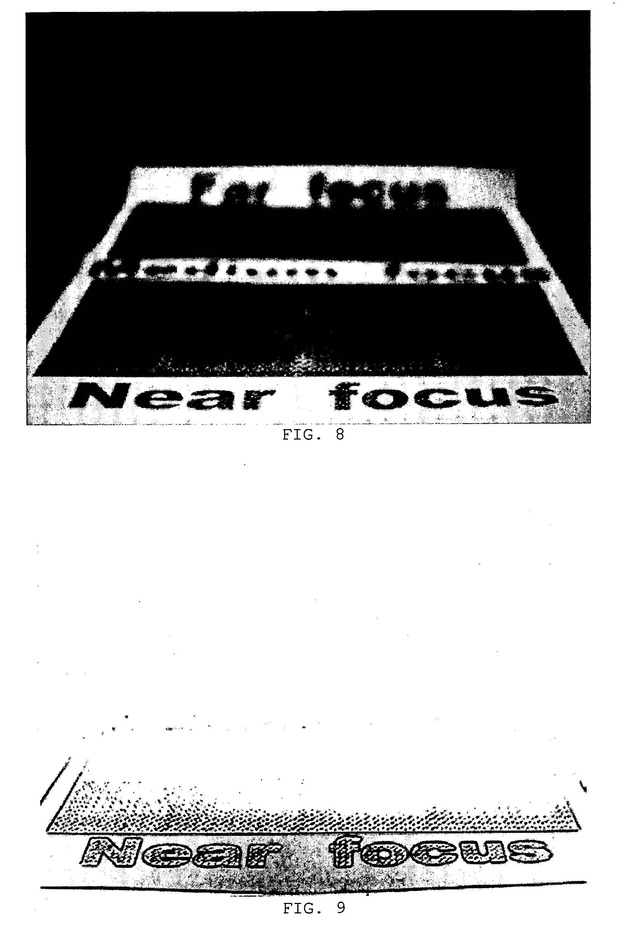

Figures 6 and 8 show exemplary images taken by the camera, at far focus and near focus respectively, the images being ones viewed in normal viewing modes (preview, record or review). Figures 7 and 9 show exemplary state-of-focus representations for the images of figures 6 and 8, respectively. As can be seen from figures 7 and 9, the state-of-focus information is provided in the form of outlines, tracing the edges of the various parts of the images which are in focus. The increase in luminance of the state-of-focus information with increasing focus results in the edge outlines in figure 7 beginning to appear only towards the background of the scene, and, in figure 9, beginning to appear only towards the foreground of the scene. That is, out-of-focus features are not outlined.

Of course, figures 6-9 are not provided in colour in this specification. Were they in colour, figure 7 would be presented in false-colour with a dark foreground, a blue mid-ground and an orange-to-red background. Figure 9 would be presented in false-colour with a dark background, a blue mid-ground and an orange-to-red foreground.

Many combinations, modifications, or alterations to the features of the above embodiments will be readily apparent to the skilled person and are intended to form part of the invention.

**Claims**

1. An electronic camera for providing a viewable image to a display device, the camera comprising:

    an image sensor portion for receiving light from an object and generating image data representative of an image therefrom; and
    an image processing portion for receiving and processing the image data for output to a display device;
    wherein the image processing portion is arranged to measure the state of focus of the image and to generate image focus data representative thereof, the image focus data providing a visual representation of the state of focus of the image for output to a display device,
    the image processing portion being further arranged to overlay the image focus data onto the corresponding image data, such that the visual representation of the state of focus of the image and an image representative of the image data may together be output to a display device.

2. The electronic camera of claim 1, the image processing portion comprising an edge detection portion for measuring the state of focus of the image by extracting edge detail from the image data and generating edge data representative of the edge detail, wherein the edge detection portion comprises a finite impulse response (FIR) high-pass filter for extracting the edge detail.

3. The electronic camera of claim 1 or 2, the image processing portion comprising an edge detection portion for measuring the state of focus of the image by extracting edge detail from the image data and generating edge data representative of the edge detail, wherein the edge detection portion is arranged to provide unipolar edge data.

4. The electronic camera of any of claims 1 to 3, the image processing portion comprising an edge detection portion for measuring the state of focus of the image by extracting edge detail from the image data and generating edge data representative of the edge detail, wherein the image focus data are configured to provide the visual representation of the state of focus of the image by providing a representation of the edge detail of the image.

5. The electronic camera of any of the preceding claims, wherein the image focus data represent a visually perceptible variable parameter, the parameter varying in dependence upon the state of focus of the image.

6. The electronic camera of any of claims 1 to 5, the image processing portion comprising an edge detection portion for measuring the state of focus of the image by extracting edge detail from the image data and generating edge data representative of the edge detail, wherein the image focus data vary in dependence upon the edge data.

7. The electronic camera of any of the preceding claims, wherein the image processing portion further comprises a false-colour converter for converting the image focus data into false-colour data.

8. The electronic camera of claim 7, wherein the false-colour converter is arranged to vary the colour of the false-colour data according to the state of focus of the image.

9. The electronic camera of any of the preceding claims, wherein the image processing portion is arranged to discard measurements of the state of focus of the image below a predetermined lower level.

10. The electronic camera of any of the preceding claims, wherein the image processing portion further comprises an amplitude reduction portion for reducing the amplitude of the image data before combination with the image focus data.

11. The electronic camera of claim 10, wherein the amplitude reduction portion is arranged to reduce the amplitude of the image data to a quarter of the initial values.

12. The electronic camera of any of the preceding claims, wherein the image processing portion further comprises a colour conversion portion for converting colour in the image data to greyscale before combination with the image focus data.

13. The electronic camera of any of the preceding claims, further comprising a display device connected to, or integral with, the camera, the display having a resolution lower than that of the image sensor portion.

14. The electronic camera of any of the preceding claims, wherein references to the image are to a selected region of the image.

15. A method of operation of an electronic camera, the method comprising the steps of:

    receiving light from an object and generating an image;

measuring a degree of focus of the image and generating image focus data representative thereof, the image focus data providing a visual representation of the degree of focus of the image;

overlaying the image focus data onto the corresponding image data; and

outputting the image focus data and the image data to a display device, such that the visual representation of the state of focus of the image and an image representative of the image data may be viewed together.

16. The method of claim 15, wherein the degree of focus is determined by analysing edge detail in the image and generating edge data representative thereof and the edge data are converted to unipolar data.

17. The method of claim 15 or 16, wherein the degree of focus is determined by analysing edge detail in the image and generating edge data representative thereof and the image focus data output to a display device provide a representation of the edge detail of the image.

18. The method of any of claims 15 to 17, wherein the visual representation is provided by a visually perceptible variable parameter, the parameter varying in dependence upon the degree of focus of the image.

19. The method of any of claims 15 to 18, wherein the degree of focus is determined by analysing edge detail in the image and generating edge data representative thereof and the image focus data vary in dependence upon the edge data.

20. The method of any of claims 15 to 19, further comprising the step of providing the visual representation of the degree of focus of the image in false colour.

21. The method of claim 20, wherein the false colour used varies according to the degree of focus of the image.

22. The method of any of claims 15 to 21, wherein measurements of the degree of focus below a predetermined lower level are not rendered in the visual representation.

23. The method of any of claims 15 to 22, wherein the luminance value for the image is reduced in amplitude before the overlaying step.

24. The method of claim 23, wherein the image is reduced to a quarter of its original luminance.

25. The method of any of claims 15 to 24, further comprising the step of converting the image to greyscale before the overlaying step.

26. The method of any of claims 15 to 25, wherein references to the image are to a selected region of the image.

Fig. 1

Fig. 2

FIG. 3

FIG. 4

OUTPUT
SIGNAL
AMPLITUDE

BLUE (80)    GREEN (82)    RED (84)

INPUT
SIGNAL
AMPLITUDE

86

FIG. 5

FIG. 6

FIG. 7

FIG. 8

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060078217 A1
- EP 1593997 A1
- JP 2005094782 A
- JP 2001136419 A
- EP 1835732 A2
- EP 1555558 A1
- JP 2002196225 A